# NEUE EUROPÄISCHE PATENTSCHRIFT

(11) **EP 0 749 793 B2**
(45) Veröffentlichungstag und Bekanntmachung des Hinweises auf die Entscheidung über den Einspruch: **30.06.2004**
(45) Hinweis auf die Patenterteilung: 14.07.1999
(21) Anmeldenummer: 96109662.5
(22) Anmeldetag: 17.06.1996
(51) Int. Cl.: B23B 47/28

(54) **Stangenbohrlehre**
Rod-shaped drill jig
Gabarit de perçage en forme de barre

(30) Priorität: 23.06.1995 DE 29510197 U
(43) Veröffentlichungstag der Anmeldung: 27.12.1996
(73) Patentinhaber: Dr. Hahn GmbH & Co. KG, D-41189 Mönchengladbach (DE)
(72) Erfinder: Pilepic, Mladen, D-41199 Mönchengladbach (DE)
(74) Vertreter: Kluin, Jörg-Eden, Dr. Dipl.-Phys.

(56) Entgegenhaltungen:
- DE-A- 4 223 094
- DE-A- 4 234 496
- DE-A- 4 310 336

## Beschreibung

Die Erfindung bezieht sich auf eine Stangenbohrlehre der dem Oberbegriff des Anspruchs 1 entsprechenden Art, und wie z.B. aus DE-A-4310336 bekannt

Weiterhin ist eine derartige Stangenbohrlehre ist durch die Firmenschrift "Hahn Stangenbohrlehre" der Firma Dr. Hahn GmbH & Co. KG in D 41189 Mönchengladbach ebenfalls bekannt. In die Bohrplatten sind Bohrbüchsen in einer den Befestigungsbohrungen in den einzelnen Bändern entsprechenden Anordnung eingesetzt Bei der bekannten Ausführungsform sind die Bohrplatten an dem Führungsprofil zwecks Anpassung an die Lager der Bänder am jeweiligen Rahmen unabhängig voneinander verschiebbar und müssen dementsprechend alle separat justiert und arretiert werden. Es handelt sich um das jeweilige untere und obere Band eines Rahmens und gegebenenfalls noch um meist dazwischen angeordnetes Band.

In vielen Fällen ist es erwünscht, das untere und das obere Band eines Fensters, einer Tür oder dergleichen in gleichen Abständen von der unteren und oberen Begrenzung des Flügels anzubringen. Dies erforderte bisher die separate entsprechende Einstellung der unteren und der oberen Bohrplatte.

Aus den DE-U-8324628 und 8535357 sind Lehrenvorrichtungen zur Sitzbestimmung von Beschlagteilen bekannt, bei denen die den Bohrplatten entsprechenden Lehren durch flexible Zugglieder derart bewegungsverbunden sind, daß sie sich stets um gleiche Strecken in entgegengesetzte Richtungen verlagern. Die Lehrenvorrichtungen weisen keine sich über die Höhe des Flügels erstreckende Führungsprofile für die Bohrplatten auf.

Der Erfindung liegt die Aufgabe zugrunde, den Vorgang der Einstellung der Bohrplatten am einer gattungsgemäßen Stangenbohrlehre zu vereinfachen.

Diese Aufgabe wird durch die in Anspruch 1 wiedergegebene Erfindung gelöst.

Die untere und die obere Bohrplatte sind nunmehr nicht unabhängig voneinander verschiebbar und entsprechend einstellbedürftig, sondern hängen über das flexible Zugglied bewegungsmäßig zusammen, so daß mit der Positionierung der einen Bohrplatte zwangsläufig auch die andere Bohrplatte mitpositioniert wird und auch nur eine Arretierung erfolgen muß.

Die Ausbildung kann im einzelnen gemäß Anspruch 2 getroffen sein.

Die nach außen offenen Nuten haben den Sinn, das flexible Zugglied zu führen und es nach außen an die Festegestellen an den Bohrplatten gelangen zu lassen, obwohl durch den hinreichend geringen Durchmesser der Rollen gesichert ist, daß das flexible Zugglied im übrigen fast ganz innerhalb des Querschnitts des Führungsprofiles verbleibt.

Bei der bevorzugten Ausführungsform liegt die Ebene, in der die Nuten sich nach außen öffnen, parallel zur Flügelebene, so daß die Schleife des flexiblen Zuggliedes ebenfalls parallel zur Flügelebene verläuft (Anspruch 3).

Gemäß Anspruch 4 können die Befestigungsstellen durch an den Bohrplatten angeordnete Befestigungsstücke ausgebildet sein.

Das flexible Zugglied ist in der bevorzugten Ausführungsform nach Anspruch 6 ein Zahnriemen. Ein solcher Zahnriemen hat für den vorliegenden Anwendungsfall den Vorteil, daß die Arretierung in Längsrichtung durch Eingriff der Zähne besonders wirksam erfolgen kann.

Prinzipiell kommen aber auch andere flexible Zugglieder wie ein Flachriemen, ein flexibles Stahlband, ein flexibles Stahlseil, eine Rundschnur oder eine Kette in Betracht.

Der Zahnriemen weist durch seine einseitige Verzahnung Vorteile bei der Festlegung an den Bohrplatten auf. Bei dieser Festlegung kann insbesondere eine Anordnung nach Anspruch 6 vorgesehen sein, bei der die Verlagerung der ineinandergreifenden Abschnitte des Zahnriemens durch den Formschluß unterbunden ist.

Damit die ineinandergreifenden Abschnitte des Zahnriemens nicht zusammen aus dem Spalt herausrutschen können, sind die Ausgestaltungen nach Anspruch 7 oder 8 zweckmäßig.

In der Zeichnung ist ein Ausführungsbeispiel der Erfindung dargestellt.
Fig. 1 zeigt eine Ansicht einer in Betriebsstellung befindlichen Stangenbohrlehre senkrecht zur Flügelebene, wobei das Führungsprofil in der Längsmittelebene geschnitten ist;
Fig. 2 und 3 zeigen Querschnitte nach den Linien A-A bzw. B-B in Fig. 1;
Fig. 4 zeigt einen Schnitt durch die Mitte des Führungsprofils im Sinne des Pfeiles X in Fig. 1 in vergrößertem Maßstab;
Fig. 5 und 6 zeigen vergrößerte Wiedergaben der Einzelheiten Y und Z in Fig. 1;
Fig. 7 zeigt eine Querschnitt etwa nach der Linie B-B in Fig. 1 bei am Rahmen einer Tür oder eines Fensters in Arbeitsstellung angebrachter Bohrlehre.

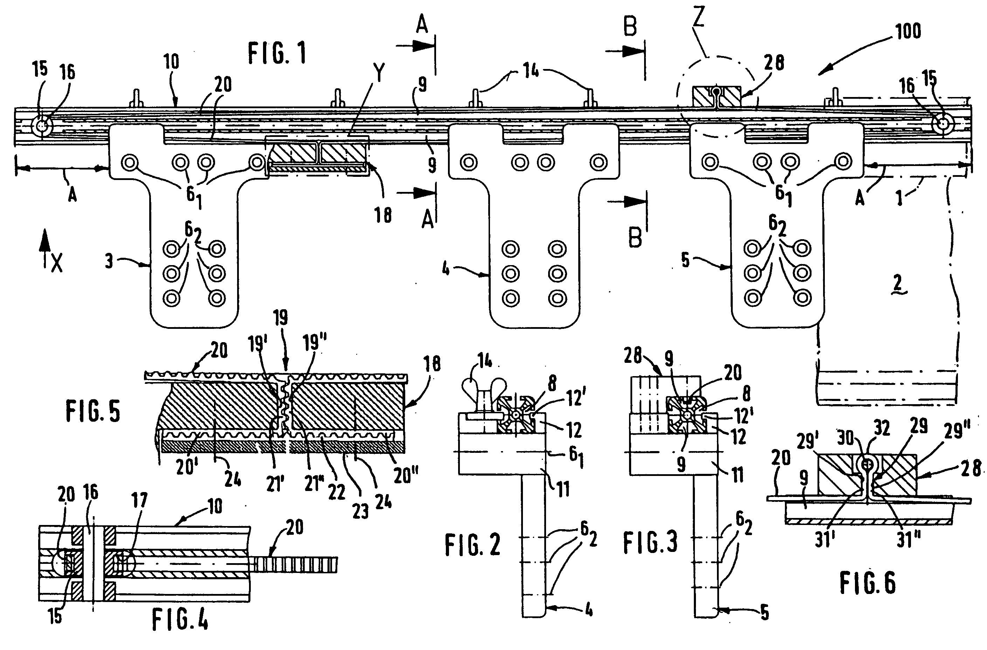

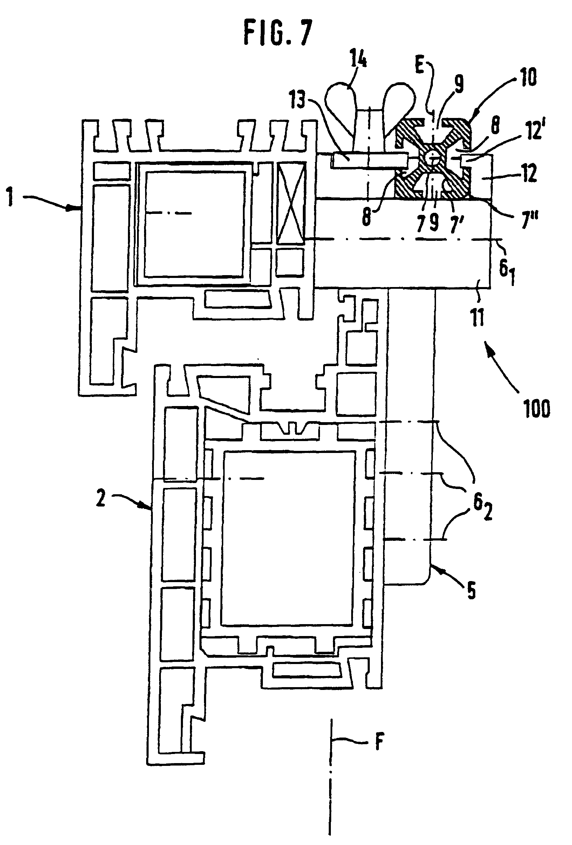

Die in Fig. 1 als Ganzes mit 100 bezeichnete Stangenbohrlehre dient zum positionsgenauen Anbringen der Bohrungen für die Bänder einer Tür, eines Fensters oder dergleichen mit einem feststehenden Rahmen 1 und einem Flügelrahmen 2, die in Fig. 1 strichpunktiert nur angedeutet und in Fig. 7 in ihrem Querschnitt dargestellt sind.

Die Stangenbohrlehre 100 umfaßt ein die "Stange" bildendes Führungsprofil 10, an welchem in dem Ausführungsbeispiel untereinander gleiche Bohrplatten 3,4,5 verschiebbar geführt sind, die jeweils einem Band zugeordnet sind und die Bohrbüchsen 6₁ bzw 6₂ für das Einbringen der Bohrungen in den feststehenden Rahmen 1 bzw. den Flügelrahmen 2 tragen.

Das Führungsprofil 10 besteht aus stranggepreßtem Aluminium mit einem Querschnitt, der in Fig. 7 am besten erkennbar ist. Der Außenquerschnitt ist etwa quadratisch. Von einem Zentralteil 7 laden vier um 90° in Umfangsrichtung versetzte Arme 7' nach außen aus, die jeweils die Ecken 7" des Quadrates tragen. An den Seiten des Quadrates sind jeweils einander gegenüberliegende nach außen offene Nuten 8,8 (senkrecht zur Flügelebene F) und 9,9 (parallel zur Flügelebene F) gebildet, die einerseits der in Längsrichtung verschiebefähigen Führung der Bohrplatten 3,4,5 an dem Führungsprofil und andererseits der Unterbringung des noch zu beschreibenden flexiblen Zuggliedes dienen.

Wie aus den Fig. 2,3 und 7 ersichtlich ist, ist an dem Führungsende der Bohrplatten 3,4,5 ein Haltekopf 11 vorgesehen, der sich gegen die gemäß Fig. 1 untere Seitenfläche des Führungsprofils 10 legt. Der Haltekopf 11 besitzt auf seiner gemäß den Fig. 2,3 und 7 rechten Oberseite einen abgewinkelten Ansatz 12, der mit seiner Abwinklung 12' auf der unteren Flanke der jeweils rechten Nut 8 des Führungsprofils 10 aufliegt.

Auf der gegenüberliegenden Seite ist ein Klemmstück 13 vorgesehen, welches auf der unteren Flanke der dortigen Nut 8 aufliegt und durch eine Flügelmutter 14 festgezogen werden kann. Damit ist die betreffende Bohrplatte 3, 4 oder 5 in Längsrichtung des Führungsprofils 10 an diesem festgelegt. Die Stangenbohrlehre 100 wird, wenn die Bohrplatten 3,4,5 in der richtigen Position arretiert sind, in der aus Fig. 7 ersichtlichen Weise an die zusammengehörigen Profile des Flügelrahmens 1 und des feststehenden Rahmens 2 angelegt und dort mittels Schraubzwingen oder dergleichen befestigt. Es kann dann das Bohren der Befestigungslöcher für die den Bohrplatten 3,4,5 jeweils entsprechenden nicht dargestellten Bänder durch die Bohrbüchsen 6₁ und 6₂ hindurch erfolgen.

Die Bohrplatte 4 kann an einer beliebigen Stelle des Führungsprofils 10, vorzugsweise in dessen Mitte angebracht werden.

Die Besonderheit der Stangenbohrlehre 100 besteht darin, daß die beiden äußeren Bohrplatten 3,5 für das jeweils untere und auch obere Band nicht voneinander unabhängig positioniert werden müssen, sondern derart bewegungsgekoppelt sind, daß ihr Abstand A (Fig. 1) von den Enden des Führungsprofils 10 stets gleich ist. Es braucht also nur eine Bohrplatte 3 oder 5 auf den gewünschten Abstand gebracht zu werden, worauf die andere Bohrplatte 5 bzw. 3 von selbst den gleichen Abstand einhält.

Dies geschieht durch eine Bewegungskopplung der Bohrplatten 3,5 mittels eines über an den Enden des Führungsprofils 10 an diesem auf zur Flügelebene senkrechten Querzapfen 16 gelagerte Umlenkrollen 15 umgelenktes flexibles Zugglied, welches in dem dargestellten Ausführungsbeispiel als Zahnriemen 20 ausgebildet ist.

Die Umlenkrollen 15 sind an beiden Enden des Führungsprofils 10 gleich ausgebildet und besitzen einen Durchmesser der die Seitenlänge des etwa quadratischen Außenquerschnitts des Führungsprofils 10 unterschreitet, so daß die Umlenkrollen 15 in der aus Fig. 1 ersichtlichen Weise ganz im Innern des Führungsprofils untergebracht sein können. Die Umlenkrollen 15 besitzen eine Umfangsnut 17 von einer der Breite des Zahnriemens 20 entsprechenden Breite, in der der Zahnriemen 20 mit nach innen weisender Zahnung um etwa 180° umgelenkt wird. Der Zahnriemen 20 verläuft in einer durch die Lage der Umlenkrollen 15 gegebenen, zur Flügelebene F parallelen Ebene E in den Nuten 9. Die Breite des Zahnriemens 20 entspricht etwa der Breite der Nuten 9 auf der Ober- bzw. Unterseite des Führungsprofils 10 gemäß der in Fig. 1 bis 3 sichtbaren Anordnung.

Mit der Bohrplatte 3 ist ein als Ganzes mit 18 bezeichnetes Festlegestück verbunden, welches einen in der Ebene des Verlaufs des Zahnriemens 20 gelegenen Spalt 19 bildet, durch den die freien Enden 20',20" des Zahnriemens 20 in der vom Führungsprofil 10 hinwegweisenden Richtung hindurchgeführt sind. Der Spalt 19 ist so eng, daß seine Flanken 19',19" (Fig. 5) in dem Spalt 19 die Verzahnungen auf den den freien Enden 20',20" benachbarten Abschnitten 21',21" miteinander formschlüssig in Eingriff halten.

Die eigentlichen freien Enden 20' und 20" sind außerhalb des Spalts 19 um 90° nach außen abgewinkelt und dort von einem kurzen Zahnriemenabschnitt 22 überdeckt, weicher mit seiner Verzahnung in die Verzahnung der freien Enden 20',20" formschlüssig eingreift und durch ein außen angebrachtes und durch Schrauben 24 befestigtes Druckstück 23 in Anlage an dem Festlegestück 18 gehalten ist. Auf diese Weise sind die Enden 20',20" des Zahnriemens 20 mit einstellbarer Spannung unverrückbar an dem Festlegestück 18 fixiert.

Von dem Festlegestück 18 verläuft der dem Ende 20' benachbarte Abschnitt des Zahnriemens 20 zu der gemäß Fig. 1 linken Umlenkrolle 15, wird dort um etwa 180° umgelenkt und erstreckt sich sodann bis zu einem Festlegestück 28 an der Bohrplatte 5, welches ebenfalls einen Spalt 29 aufweist, in dem der Zahnriemen 20 aus der oberen Nut 9 heraus eintritt. Außenseitig der Nut 29 ist der Zahnriemen 20 bei 32 um 180° abgewinkelt und kehrt wieder in die Nut 29 zurück, wobei die Nut 29 so eng ist, daß ihre Flanken 29',29" die Verzahnung der einander gegenüberliegenden Abschnitte 31',31" des Zahnriemens 20 miteinander formschlüssig in Eingriff halten, In dem Scheitel der 180°-Abwinklung 32 ist ein Zapfen 30 angebracht, der in seinem Durchmesser so bemessen ist, daß die Abschnitte 31',31" in der Nut 29 blockiert sind und nicht etwa gemeinsam gemäß Fig. 6 nach unten aus dieser herausrutschen können.

Auch an dem Festlegestück 28 ist also der Zahnriemen 20 in Zugrichtung unverrückbar fixiert. Er erstreckt sich von dort gemäß Fig. 1 nach rechts über die am dortigen Ende des Führungsprofils 10 angebrachte Umlenkrolle 15 und von dort zurück bis zu dem freien Ende 20' an dem Festlegestück 18.

Der Zahnriemen 20 verläuft also praktisch ganz im Innern des Führungsprofils 10 und ist entsprechend geschützt. Nur an den Stellen der Festlegestücke 18,28 tritt der Zahnriemen 20 aus den Nuten 9,9 heraus, um an den Festlegestücken 18 bzw. 28 angreifen zu können. Die um 90° versetzten Nuten 8,8 dienen dem Eingriff des abgewinkelten Ansatzes 12, d.h. der Führung der Bohrplatten 3,4,5 an dem Führungsprofil 10.

Bei der Arbeit mit der Stangenbohrlehre 100 braucht der Monteur lediglich eine Bohrplatte 3 oder 5 auf den gewünschten Abstand A vom Ende des Führungsprofils 10 einzustellen und kann dann sicher sein, daß sich die jeweils andere Bohrplatte von selbst im gleichen Abstand vom dortigen Ende des Führungsprofils 10 befindet.

## Patentansprüche

1. Stangenbohrlehre (100) für das Anbringen der Bohrungen für die Befestigung der Bänder von Fenstern. Türen und dergleichen an deren Rahmenprofilen,
mit einem stangenförmigen. sich Ober die Höhe des Flügels erstreckenden Führungsprofil (10)
und mit mindestens zwei an dem Führungsprofil (10) in dessen Längsrichtung verschiebbar geführten Bohrplatten (3,5) für die Bohrungen das oberen und des unteren Bandes.
**dadurch gekennzeichnet,**
**daß** an den Enden des Führungsprofils (10) jeweils eine Umlenkrolle (15) drehbar gelagert ist und die Bohrplatten (3,5) durch ein um die Umlenkrollen (15,15) geschlungenes flexibles Zugglied,
derart bewegungsverbunden sind, daß sie um gleiche Beträge gegensinnig entlang des Führungsprofils (10) bewegbar sind.

2. Stangenbohrlehre nach Anspruch 1, **dadurch gekennzeichnet, daß** das Führungsproff) (10) auf zwei einander gegenüberliegenden Seiten in einer Ebene (E) gelegene nach außen offene Nuten (9,9) von einer der Breite des Zuggliedes mindestens gleichen Breite aufweist, daß die Umlenkrollen (15) auf zu der Ebene senkrechten Achsen (16) gelagert sind und einen die Breite des Führungsprofils (10) in der Ebene unterschreitenden Durchmesser aufweisen und daß sich das Zugglied von einer Festiegestelle an der einen Bohrplatte (3) in einer Nut (9) bis zu einer Umlenkrolle (15) von dort nach Umlenkung um etwa 180° in der anderen Nut (9) bis zu der anderen Bohrplatte (5). von dort in der gleichen Nut (8) bis zu der anderen Umlenkrolle (15) und von dort nach Umlenkung um etwa 180° in der einen Nut (9) wieder bis zu der Festlegestelle an der ersten Bohrplatte (3) erstreckt.

3. Stangenbohhehre nach Anspruch 2, **dadurch gekennzeichnet, daß** die Ebene (E) der Nuten (9,9) parallel zur Flügelebene gelegen ist,

4. Stangenbohrlehre nach Anspruch 2 oder 3, **dadurch gekennzeichnet, daß** die Festlegestellen durch innenseltig bzw. außenseltig des Führungsprofils (10) an den Bohrplatten (3) bzw. (5) angeordnete Festlegestücke (18) bzw. (28) gebildet sind.

5. Stangenbohrlehre nach einem der Ansprüche 1 bis 4, **dadurch gekennzeichnet, daß** das flexible Zugglied ein Zahnriemen (20) ist.

6. Stangenbohrlehre nach Anspruch 5, **dadurch gekennzeichnet, daß** die Festlegestücke (18,28) einen sich quer zur Zugrichtung des Zahnriemens (20) erstreckenden Spalt (19,29) aufweisen, durch den Abschnitte (21',21'', 31',31'') des Zahnriemens (20) mit einander zugewandter und durch die Flanken (19',19'',29',29'') des Spalts (19,29) formchlüssig in Eingriff gehaltener Verzahnung hindurchgeführt sind.

7. Stangenbohrlehre nach Anspruch 6, **dadurch gekennzeichnet, daß** die Abschnitte (21',21') des Zahnriemens (20) an den Enden des Zahnriemens (20) gelegen sind und die freien Enden (20',20'') des Zahnriemens (20) aus dem Spalt (19) heraus um jeweils 90° nach außen abgewinkelt sind und daß die abgewinkelten treten Enden (20',20") zumindest teilweise von einem kurzen Zahnriemenabschnitt (22) Oberdeckt sind, der mit seiner Verzahnung formschlüssig in die Verzahnungen der freien Enden (20',20'') eingreift und gegen sie gedrückt ist.

8. Stangenbohrlehre nach Anspruch 6, **dadurch gekennzeichnet, daß** die Abschnitte (31',31'') des Zahnriemens (20) einander benachbart und an einer 180°-Abwinklung (32) des Zahnriemens (20) gebildet sind und daß In der 180°-Abwinklung (32) ein Zapfen (30) angeordnet ist, der sich auf einer Seite vor die Ränder der Nut (29) setzt und das Herausziehen der zusammengefalleten Abschnitte (31',31") des Zahnriemens (20) aus dem Spalt (29) zur anderen Seite hin unterbindet.

## Claims

1. Rod-shaped drill jig (100) for the provision of holes for the attachment of hinges of windows, doors and the like to their frame sections,
with a rod-shaped guiding section (10) extending the height of the flap
and with at least two hole-bearing plates (3, 5) for the holes of the upper and lower hinge guided to slide on the guiding section (10) in the direction of its length,
**characterised in that**, a respective direction-reversing roller (15) is rotatably mounted on each end of the guiding section (10) and the hole-bearing plates (3, 5) are connected together for movement by means of a flexible tension member passing round the rollers (15, 15) in such a way that they move along the guiding section (10) through the same amount in opposite directions.

2. Rod-shaped drill jig according to claim 1, **characterised in that** the guiding section (10) has on two mutually opposite sides outwardly open grooves (9, 9) arranged in one plane (E) and of a width at least equal to the width of the tension member, that the direction-reserving rollers (15) are mounted on axes (16) perpendicular to the plane and have a diameter less than the width of the guiding section (10) in the plane and that the tension member extends from a fixed attachment point on the one hole-bearing plate (3) in a groove (9) to a direction-reversing roller (15), from there after reversal through about 180° as far as the other hole bearing plate 5, from there in the same groove as far as the other direction-reversing roller (15), and from their after reversal through about 180° in the one groove (9) back to the attachment point on the first hole-bearing plate (3).

3. Rod-shaped drill jig according to claim 2, **characterised in that** the plane (E) of the grooves (9, 9) is parallel to the plane of the flap.

4. Rod-shaped drill jig according to claim 2 or 3, **characterised in that** the attachment points are formed by securing members (18) and (28) arranged on the hole-bearing plates (3) and (5) inside and outside the guiding section (10).

5. Rod-shaped drill-jig according to one of claims 1 to 4, **characterised in that** the flexible tension member is a toothed belt (20).

6. Rod-shaped drill-jig according to claim 5, **characterised in that in that** the securing members (18, 28) have a gap (19, 29) extending transverse to the direction of tension of the toothed belt (20), through which portions (21', 21'', 31', 31") of the toothed belt (20) are conducted with mutually facing teeth held mechanically in engagement through the flanks (19', 19''; 29', 29'') of the gap (19, 29).

7. Rod-shaped drill jig according to claim 6, **characterised in that** the portions (21', 21") of the toothed belt (20) are present at the ends of the toothed belt (20) and the free ends (20', 20'') of the toothed belt (20) are folded back outwards from the gap (19) through respectively 90° and that the folded back free ends (20' 20") are at least partially overlapped by a short toothed belt portion (22) which engages with its teeth mechanically in the teeth of the free ends (20' 20") and is pressed against them.

8. Rod-shaped drill jig according to claim 6, **characterised in that** the portion (31', 31") of the toothed belt (20) are mutually adjacent and are formed by the toothed belt (20) being bent back through 180° (32) and that in the 180° bent back portion (32) there is provided a pin (30) which is seated on one side in front of the edges of the groove (29) and prevents the withdrawal of the folded-together portions (31', 31'') of the toothed belt (20) out of the gap (29) towards the other side.

## Revendications

1. Gabarit de perçage en forme de barre (100) pour la réalisation de perçages destinés à la fixation de pentures de fenêtres, de portes ou objets analogues sur les profilés de cadre de ceux-ci, comportant un profilé de guidage (10) s'étendant sur la hauteur du battant, ainsi qu'au moins deux plaques de perçage pouvant coulisser en étant guidées le long du profilé (10), selon la direction longitudinale de celui-ci, ces plaques servant à réaliser les perçages de montage de la penture inférieure et de la penture supérieure,
**caractérisé en ce que**
le profilé de guidage (10) porte à chacune de ses extrémités, un galet tournant (15) de renvoi, et les plaques de perçage (3, 5) reliées en déplacement par un organe flexible de traction circulant en boucle sur les galets de renvoi (15, 15) ont leurs mouvements reliés entre eux de sorte qu'elles se déplacent le long du profilé de guidage (10), en sens contraire et de la même longueur.

2. Gabarit de perçage selon la revendication 1,
**caractérisé en ce que**
le profilé de guidage (10) présente, le long des deux côtés opposés, des rainures (9, 9) situées dans un plan (E), ouvertes vers l'extérieur et d'une largeur au moins égale à celle de l'organe de traction, les galets de renvoi (15) montés sur des axes (16) perpendiculaires au plan (E) présentant dans ce plan un diamètre inférieur à la largeur du profilé de guidage (10) tandis que l'organe de traction partant d'un point de fixation sur la première plaque de perçage (3) dans une rainure (9) jusqu'à un galet de renvoi (15) et de là, après une rotation d'environ 180° dans l'autre rainure (9) jusqu'à l'autre plaque de perçage (5) de là dans la même rainure (9) jusqu'à atteindre l'autre galet de renvoi (15) et de là, après avoir tourné d'environ 180°, s'étend de nouveau à l'intérieur de la première rainure (9) jusqu'à un point de fixation sur la première plaque de perçage (3).

3. Gabarit de perçage selon la revendication 2,
**caractérisé en ce que**
le plan (E) des rainures (9, 9) est parallèle au plan du battant.

4. Gabarit de perçage selon les revendications 2 ou 3,
**caractérisé en ce que**
les points de fixation sont matérialisés par des pièces de fixation (18) et (28) montées respectivement sur les plaques de perçage (3) et (5) et situées l'une vers la face interne, l'autre vers la face externe du profilé de guidage (10).

5. Gabarit de perçage selon l'une des revendications 1 à 4,
**caractérisé en ce que**
l'organe flexible de traction est une courroie crantée (20).

6. Gabarit de perçage selon la revendication 5,
**caractérisé en ce que**
les pièces de fixation (18, 28) présentent une fente (19, 29) s'étendant perpendiculairement à la direction de traction de la courroie crantée (20) et que traversent des parties (21', 21", 31', 31") de la courroie (20) portant des dentures se faisant face et maintenues en prise avec combinaison de forme par les flancs (19', 19", 29', 29") de la fente (19, 29).

7. Gabarit de perçage selon la revendication 6,
**caractérisé en ce que**
les parties (21', 21") de la courroie crantée (20) se trouvent aux extrémités de cette courroie et les extrémités libres (20', 20") de celle-ci sortent de la fente (19) chacune par un coude de 90° vers l'extérieur, ces extrémités coudées (20', 20") étant recouvertes au moins en partie par un court morceau de courroie crantée (22) en prise avec combinaison de formes par sa denture avec celles des extrémités libres (20', 20") sur lesquelles il est appliqué.

8. Gabarit de perçage selon la revendication 6,
**caractérisé en ce que**
les parties (31', 31") de la courroie crantée (20) sont voisines l'une de l'autre et sont constituées par un pliage (32) à 180° de la courroie (20), à l'intérieur duquel est logée une tige (30) qui d'un côté dépasse devant les bords de la rainure (29) et empêche que les parties (31', 31") de la courroie (20) pliées ensemble puissent sortir de la fente (29), de l'autre côté.
